(19) Europäisches Patentamt
European Patent Office
Office européen des brevets

(11) **EP 4 313 720 B1**

(12) **EUROPÄISCHE PATENTSCHRIFT**

(45) Veröffentlichungstag und Bekanntmachung des Hinweises auf die Patenterteilung:
**26.02.2025 Patentblatt 2025/09**

(21) Anmeldenummer: **22717785.4**

(22) Anmeldetag: **23.03.2022**

(51) Internationale Patentklassifikation (IPC):
**B61H 1/00** (2006.01)   **F16D 49/16** (2006.01)
**B60T 8/17** (2006.01)   **B60T 8/32** (2006.01)
**B60T 8/74** (2006.01)   **B60T 13/66** (2006.01)
**B60T 17/22** (2006.01)   **B60T 8/24** (2006.01)

(52) Gemeinsame Patentklassifikation (CPC):
**B61H 1/00; B60T 8/1705; B60T 8/241; B60T 8/245; B60T 8/3235; B60T 8/328; B60T 8/74; B60T 13/665; B60T 17/228; F16D 49/16;** F16D 2125/64; F16D 2125/70

(86) Internationale Anmeldenummer:
**PCT/EP2022/057662**

(87) Internationale Veröffentlichungsnummer:
**WO 2022/207432 (06.10.2022 Gazette 2022/40)**

(54) **FAHRZEUG MIT EINER SENSORANORDNUNG ZUR MESSUNG EINES STELLWINKELS DES STELLELEMENTES, MESSANORDNUNG UND MESSVERFAHREN**

VEHICLE WITH A SENSOR ARRANGEMENT FOR MEASUREMENT OF AN ADJUSTMENT ANGLE OF THE ACTUATOR, MEASUREMENT ARRANGEMENT AND MEASUREMENT METHOD

VÉHICULE AVEC UN DISPOSITIF DE CAPTEUR POUR LA MESURE D'UN ANGLE DE RÉGLAGE DE L'ACTIONNEUR, DISPOSITIF DE MESURE ET PROCÉDÉ DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2021 DE 102021203122**

(43) Veröffentlichungstag der Anmeldung:
**07.02.2024 Patentblatt 2024/06**

(73) Patentinhaber: **Siemens Mobility GmbH**
**81739 München (DE)**

(72) Erfinder: **LEITEL, Holger**
**82049 Pullach (DE)**

(74) Vertreter: **Siemens Patent Attorneys**
**Postfach 22 16 34**
**80506 München (DE)**

(56) Entgegenhaltungen:
**EP-A1- 3 676 138**   **CA-A1- 2 652 618**
**CN-A- 111 959 463**   **DE-A1- 102013 222 201**
**US-A- 3 897 979**

EP 4 313 720 B1

**Beschreibung**

Die Erfindung betrifft ein Fahrzeug mit einem rotatorisch beweglichen Stellelement und mit einer Sensoranordnung zur Messung eines Stellwinkels des Stellelementes. Außerdem betrifft die Erfindung ein Verfahren zum Messen des Stellwinkels eines rotatorisch beweglichen Stellelementes in einem Fahrzeug, bei der eine Sensoranordnung zur Messung des Stellwinkels zum Einsatz kommt. Weiterhin betrifft die Erfindung eine Messanordnung, die zur Durchführung eines Verfahrens zum Messen eingerichtet ist. Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist. Das Dokument US3897979A beschreibt ein trägheits-und schwerkraftempfindliches Anhängerbremsen-Steuersystem ohne Referenzbeschleunigungssensor.

Bei Fahrzeugen gibt es eine Vielzahl von Stellelementen, deren Funktion auf auftretende Fehler hin überprüft werden müssen. Insbesondere gilt dies für Bremsen, da diese sicherheitsrelevante Funktionselemente des Fahrzeugs darstellen. Bremsbeläge unterliegen einem Verschleiß, so dass diese bei Erreichen einer Verschleißgrenze ausgewechselt werden müssen. Außerdem kann es bei den Bremsen zu Funktionsfehlern kommen, insbesondere kann es vorkommen, dass ein Bremsbelag oder eine den Bremsbelag tragender Bremsklotz verloren geht, wodurch die Bremse in ihrer Funktion beeinträchtigt wird.

Beispielsweise wird vor der Abfahrt von Güterzügen sichergestellt, dass die Bremsanlage des Wagens funktionstüchtig ist. Dabei wird überprüft, ob alle Bremsklötze der Güterwagen (Fahrzeuge) vorhanden sind und die Beläge noch eine genügende Belagstärke aufweisen und ob sich die Bremsen anlegen und lösen lassen.

Die Prüfung, ob alle Bremsklötze eines Güterwagens vorhanden sind und eine ausreichende Belagstärke aufweisen, wird derzeit üblicherweise durch eine manuelle optische Kontrolle durch den Wagenmeister bei der Abfertigung eines Zuges sichergestellt. Auf eine Ausrüstung der Bremsbeläge mit Verschleißsensoren, wie dies beispielsweise bei Personenkraftwagen gemacht wird, wird bei Güterwagen aus Kostengründen verzichtet. Dies liegt nicht zuletzt daran, dass die Anzahl der bei einem Güterwagen zum Einsatz kommenden Bremsbeläge diejenigen bei einem Personenkraftwagen bei weitem übersteigt.

Aus der CA 2652618 A1 ist eine Sensoranordnung für Lastkraftwagen beschrieben, welche die Funktion eines Bremssystems überwachen kann. Dies erfolgt durch Erfassung eines Stellwinkels eines Stellelementes, welches für die Betätigung der Bremsen verwendet wird.

Das Dokument DE 10 2013 222 201 A1 beschreibt eine Sensoranordnung zur Erfassung einer Pedalbewegung in einem Fahrzeug mit einer Auswerte- und Steuereinheit und mindestens einem mit dem Pedal bewegten mindestens zweikanaligen Messsensor. Ein mindestens zweikanaliger Referenzsensor ist ortsfest im Fahrzeug angeordnet.

Die Aufgabe der Erfindung besteht darin, ein Fahrzeug mit einem rotatorisch beweglichen Stellelement, zum Beispiel einem Stelleelement für eine Bremse, oder eine Sensoranordnung für ein solches Stellelement anzugeben, welches bei geringem Wartungsaufwand möglichst zuverlässig betrieben werden kann. Außerdem ist es Aufgabe der Erfindung, ein Verfahren anzugeben, welches zum Betrieb eines solchen Fahrzeugs bei geringem Wartungsaufwand und hoher Zuverlässigkeit eingesetzt werden kann. Außerdem besteht die Aufgabe der Erfindung darin, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird mit dem eingangs angegebenen Anspruchsgegenstand (Fahrzeug) erfindungsgemäß dadurch gelöst, dass die Sensoranordnung einen Mess-Beschleunigungssensor aufweist, der an dem Stellelement befestigt ist, und einen Referenz-Beschleunigungssensor aufweist, der unbeweglich an dem Fahrzeug befestigt ist. Außerdem ist die Sensoranordnung eingerichtet,

- unter Berücksichtigung der Richtung der Erdbeschleunigung (g) vom Stellwinkel ($\alpha$) und der Fahrzeuglage abhängige Winkel-Messdaten zu erzeugen und
- unter Berücksichtigung der Richtung der Erdbeschleunigung (g) von der Fahrzeuglage abhängige Messfehler-Messdaten zu erzeugen,

aus den Winkel-Messdaten unter Berücksichtigung der Messfehler-Messdaten rechnergestützt den Stellwinkel ($\alpha$) zu berechnen,
und als Stellwinkel ($\alpha$) mindestens ein Anschlagwert für das Stellelement (STE) zu berechnen, der gemessen wird, wenn eine Vergrößerung des Stellwinkels ($\alpha$) durch einen Anschlag verhindert wird.

Die Tatsache, dass der Referenz-Beschleunigungssensor unbeweglich an dem Fahrzeug befestigt ist, bedeutet, dass dieser bezüglich eines mit dem Fahrzeug fest verbundenen Koordinatensystems ortsfest ist. Ortsfest bedeutet im Sinne der Erfindung, dass der Referenz-Beschleunigungssensor keine Rotation des Stellelementes aber auch keine andere Relativbewegung zum Fahrzeug (zumindest während der Messung) mitmacht.

Demgegenüber ist der Mess-Beschleunigungssensor ortsfest auf dem Stellelement befestigt, d. h., dass dieser bezüglich eines Koordinatensystems, welches mit dem Stellelement verbunden ist, ortsfest ist. Dies bedeutet aber auch, dass der Beschleunigungssensor bei einer Rotation des Stellelementes mit diesem zusammen eine Rotation ausführt, die in einem ortsfest mit dem Fahrzeug verbunden Koordinatensystem und in einem mit der Erde fest verbundenen globalen Koordinatensystem beschreibbar ist.

Der Mess-Beschleunigungssensor ermittelt den Winkel des Stellelementes gegenüber dem Vektor der Erdanziehung (zum Erdmittelpunkt ausgerichtet) durch eine Messung der Erdgravitation, vorzugsweise in drei orthogonal zueinander stehenden Raumachsen (zum Beispiel dem globalen Koordinatensystem, hierzu im Folgenden noch mehr). Er eignet sich somit auch nur für Hebel, deren Winkel sich nicht parallel zur Erdoberfläche verändert, also mit einer senkrechten Drehachse.

Ein Winkelversatz der Drehachse größer 0° bezogen auf die Senkrechte des Fahrzeugs ist somit für die Funktion des Mess-Beschleunigungssensors Voraussetzung für dessen Funktion. Dies bedeutet, dass die Drehachse des rotatorisch gelagerten Stellelementes gegenüber der Senkrechten des Fahrzeugs geneigt sein muss, also ein Neigungswinkel größer 0°, bevorzugt größer 30°, noch bevorzugter größer 60° aufweisen muss. Nur dann lässt sich aufgrund einer Veränderung des Stellwinkels eine Änderung der gemessenen Beschleunigung feststellen, wenn die Erdbeschleunigung auf den Beschleunigungssensor bedingt durch die Rotation des Stellelementes in einem anderen Winkel wirkt.

Mit der Senkrechten des Fahrzeugs ist eine gedachte Achse gemeint, die für den Fall, dass das Fahrzeug auf einem waagerechten Untergrund steht, genau senkrecht ausgerichtet ist. Dies bedeutet, dass die Senkrechte in diesem Fall genau der Ausrichtung der Erdbeschleunigung entspricht.

Der erfindungsgemäße Mess-Beschleunigungssensor kann an beliebiger Stelle auf dem sich bewegenden Stellelement montiert werden. Dabei besitzt er selbst keine bewegten mechanischen Teile, die gegen Umwelteinflüsse geschützt werden müssen und ist daher sehr robust und einfach zu montieren. Hier liegt ein wesentlicher Vorteil gegenüber sonstigen Sensorprinzipien, die im Mittelpunkt der Drehachse des Stellelementes montiert werden müssen, was bei einer Nachrüstung und speziell bei Bremsanlagen von Güterwagen sehr schwierig ist.

Es ist möglich, dass sich die Lage der Drehachse gegenüber der Erdoberfläche betriebsbedingt verändert (z.B. durch eine zeitweise Schieflage des Fahrzeugs, Gefälle oder Seitenneigung der Strecke, insbesondere eines Gleises). Diese Lageveränderung wird durch den Mess-Beschleunigungssensor prinzipbedingt mitermittelt, stellt messtechnisch allerdings einen unbekannten Messfehler dar. Diese Lageveränderung wird erfindungsgemäß daher mittels des Referenz-Beschleunigungssensors ermittelt. Die Werte des Mess-Beschleunigungssensors müssen daher mit den Werten des Referenz-Beschleunigungssensors verrechnet werden, um den Messfehler zu kompensieren.

Dabei ist man in der Wahl des Montageorts des Referenz-Beschleunigungssensors frei, solange sich der Montageort derart am Fahrzeug befindet, das der Referenz-Beschleunigungssensor alle Bewegungen des Fahrzeugs als Ganzem mitmacht. Mit anderen Worten darf keine Relativbewegung zwischen dem Fahrzeug und dem Referenz-Beschleunigungssensor auftreten. Somit muss der Referenz-Beschleunigungssensor unbeweglich am Fahrzeug befestigt sein. Demgegenüber ist der Messbeschleunigungssensor beweglich am Fahrzeug befestigt, da er sich auf dem rotatorisch am Fahrzeug beweglichen Stellelement befindet und dessen Bewegungen daher mitmacht. Auf dem Stellelement selbst ist der Mess-Beschleunigungssensor zumindest hinsichtlich der zu messenden Rotation, also bezüglich der mit der zu messenden Rotation verbundenen Freiheitsgrade unbeweglich befestigt.

Folgende Vorteile lassen sich mit der vorstehend beschriebenen Konstruktion erreichen.

- Der Montageort Mess-Beschleunigungssensors auf dem Stellelement kann vollkommen frei und ohne Restriktionen an mechanische Verbindungen gewählt werden.
- Der Montageort des Referenz-Beschleunigungssensors für die Lagebestimmung der Drehachse kann vollkommen frei und ohne Restriktionen an mechanische Verbindungen, solange sich seine Lage mit der Lage des Fahrzeugs verändert.
- Durch die Freiheit in den Montagepositionen sind keine Veränderungen an möglicherweise bestehenden Konstruktionen nötig, die erfindungsgemäße Messanordnung kann daher unproblematisch nachgerüstet werden.
- Durch die Freiheit in den Montagepositionen kann für beide Sensoren unabhängig voneinander eine kostenoptimierte Montageart gewählt werden

Gemäß einer Ausgestaltung der Erfindung ist vorgesehen, dass der Mess-Beschleunigungssensor und der Referenz-Beschleunigungssensor als Dreiachsensensor ausgeführt sind.

Die Verwendung eines Dreiachsensensors für den Referenz-Beschleunigungssensor und den Mess-Beschleunigungssensor hat den Vorteil, dass rotatorische Lageänderungen im dreidimensionalen Raum unabhängig davon gemessen werden können, um welche der drei Achsen des kartesischen Koordinatensystems die Rotation tatsächlich erfolgt. Hierdurch sind vorteilhaft besonders genaue Messungen möglich. Insbesondere können eine Seitenneigung des Fahrzeugs sowie ein Gefälle oder Steigung des Untergrundes, auf dem sich das Fahrzeug befindet, berücksichtigt werden.

Ein minimales Kippen quer zu Drehrichtung der Drehachse hat keinen signifikanten Einfluss auf die Winkelmessung, da die Sinus-Komponente der Winkeländerung bei kleinen Winkeln klein ist und der daraus resultierende Messfehler daher vernachlässigt werden kann. Daher kann bei kleinen Neigungswinkeln auch ein 2-achsiger Sensor eingesetzt werden, wobei das besagte Kippen unberücksichtigt bleibt.

Bei einer Drehachse quer zur Fahrrichtung ist das besagte Kippen eine seitliche Neigung des Fahrzeugs (zum Beispiel Kurvenfahrt) . Bei einer Drehachse in Fahrtrichtung ist das besagte Kippen eine Neigung in Fahrtrichtung (zum Beispiel Steigung oder Gefälle).

Gemäß einer Ausgestaltung der Erfindung ist vorgesehen, dass das rotatorisch gelagerte Stellelement einen Teil eines Bremsgestänges für das Fahrzeug bildet.

Bei dem Teil des Bremsgestänges, der das Stellelement bildet, kann es sich um eine (drehbar gelagerte) Welle oder um einen drehbar gelagerten Hebel handeln. Reine Schub- oder Zugstangen hingegen eignen sich nicht, da diese translatorisch bewegt werden.

Vor der Abfahrt eines Güterzuges kann sichergestellt werden, dass die Bremsanlage eines Fahrzeugs (Güterwagen) korrekt funktioniert. Dabei muss unter anderem sichergestellt sein, dass alle Bremsbeläge eines Drehgestells oder Güterwagens vorhanden sind und noch eine ausreichende Belagstärke aufweisen.

Mit der erfindungsgemäßen Sensoranordnung ist es möglich, bei klotzgebremsten Fahrzeugen aufgrund der Winkelveränderung von nur einem Bauteil der Bremsgestänges am Wagen zu prüfen, ob noch alle Beläge vorhanden sind und ob die Stärke der verwendeten Bremsbeläge noch ausreicht und ob die Bremsen gelöst sind, oder tatsächlich anliegen (hierzu im Zusammenhang mit dem erfindungsgemäßen Verfahren noch mehr).

Dies bedeutet vorteilhaft, dass eine sensorgestützte Überwachung der Bremsbeläge mit nur geringem messtechnischen Aufwand ermöglicht wird. Außerdem kann das erfindungsgemäße Fahrzeug auch durch Nachrüsten der erfindungsgemäßen Sensoranordnung verwirklicht werden, da der Mess-Beschleunigungssensor sowie der Referenz-Beschleunigungssensor auf der Oberfläche von Bauteilen des Fahrzeugs befestigt werden können, ohne dass die betreffenden (möglicherweise Zulassungsrelevanten) Bauteile selbst in ihrer Funktion oder Gestalt modifiziert werden müssten. Gemäß einer Ausgestaltung der Erfindung ist vorgesehen, dass die Drehachse des rotatorischen Stellelementes in dem Fahrzeug in Einbaulage zumindest im Wesentlichen waagerecht eingebaut ist.

Eine zumindest im wesentlichen waagerechte Einbaulage ist auch gegeben, wenn die Einbaulage nicht exakt waagerecht ist, vorzugsweise um bis zu 10° aus der Waagerechten geneigt ist.

Bei einer waagerecht ausgerichteten Drehachse geht die aufgrund der Drehung gemessene Änderung der Beschleunigungswerte vollständig in die Winkelberechnung ein, wodurch sich vorteilhaft das Berechnungsverfahren vereinfacht, wie nachfolgend gezeigt. Gleichzeitig werden auftretende Messfehler vorteilhaft verringert.

In einem globalen Koordinatensystem liege die Drehachse des Stellelementes auf der y-Achse und die Erdbeschleunigung wirke in Richtung der z-Achse. Um in diesem einfachen Fall mit Hilfe des Beschleunigungssensors den Neigungswinkel zur Erdoberfläche zu berechnen, können vereinfachende Annahmen gemacht werden. Der Sensor wird um den Winkel $\alpha$ um die y-Achse gedreht, dadurch ändert sich die Beschleunigung in die x bzw. z- Richtung. Es gilt:

$$A_z = g \cdot \cos(\alpha) \quad \text{und} \quad -A_x = g \cdot \sin(\alpha)$$

und somit:

$$\alpha = \arctan(- A_x / A_z)$$

wobei $A_z$ und $A_x$ die jeweiligen Beschleunigungsanteile in z-Richtung und x-Richtung sind.

Gemäß einer Ausgestaltung der Erfindung ist vorgesehen, dass das Fahrzeug eine Ausgabeeinrichtung aufweist, wobei diese eingerichtet ist, ein mit der Messung des Stellwinkels verknüpftes Ergebnis über eine Ausgabeschnittstelle zu empfangen.

Die Ausgabeeinrichtung ermöglicht es vorteilhaft, dass eine mit der Messung des Stellwinkels verbundene Aussage, die beispielsweise die Erforderlichkeit einer Wartung einer Bremse beinhaltet, unmittelbar am Fahrzeug angezeigt werden kann. Dies vereinfacht vorteilhaft im Betrieb beispielsweise eines Güterwaggons die Beurteilung von erforderlichen Wartungsmaßnahmen. Beispielsweise kann Zugpersonal anhand der Ausgabeeinrichtung feststellen, ob die Bremsen bei der letzten Fahrt einwandfrei funktioniert haben oder ob sie zur Beurteilung erforderlicher Wartungsmaßnahmen genauer inspiziert werden müssen.Insbesondere kann das Personal bei der Abfertigung eines Zuges auch vor dem Losfahren feststellen, ob die Bremsen einwandfrei funktionieren. Wird diese Information über ein elektronisches Gerät (z.B. ein Brems Monitoring System) dem Lokführer live zur Verfügung gestellt, trägt dies dazu bei, die Abfertigungszeit eines Zuges zu verkürzen.

Im einfachsten Fall kann die Ausgabeeinrichtung eine Warnleuchte sein, die die Erforderlichkeit einer Wartungsmaßnahme anzeigt. Bei der Ausgabeeinrichtung kann es sich auch um ein Display handeln, welches Symbole oder Textinformationen übermitteln kann, beispielsweise die Information "Wartung erforderlich". Möglich ist es auch, dass die Ausgabeeinrichtung ein Funksignal ausgibt, welches beispielsweise in einer Leitzentrale empfangen wird, um dort die Erforderlichkeit von Wartungsmaßnahmen zu beurteilen.

Gemäß einer Ausgestaltung der Erfindung ist vorgesehen, dass der Referenz-Beschleunigungssensor und die Ausgabeeinrichtung als Baueinheit ausgeführt sind.

Eine Sensoranordnung, bei der der Referenzbeschleunigungssensor und die Ausgabeeinrichtung als Baueinheit ausgeführt sind, ermöglicht vorteilhaft eine einfachere Montage am Fahrzeug. Dabei muss die Baueinheit derart angebracht sein, dass die Ausgabeeinrichtung für das Bahnpersonal leicht bedienbar bzw. ablesbar ist. Der Montageort muss gleichzeitig eine ortsfeste Verbindung der Baueinheit zulassen, damit der Beschleunigungssensor seine Funktion erfüllen kann.

Demgegenüber wird der Mess-Beschleunigungssensor an dem Stellelement befestigt, welches normalerweise für die Unterbringung einer Anzeige bzw. Ausgabeeinrichtung wegen einer eingeschränkten Zugänglichkeit weniger geeignet ist.

Die genannte Aufgabe wird alternativ mit dem eingangs angegebenen Anspruchsgegenstand (Verfahren) erfindungsgemäß auch dadurch gelöst, dass durch die Sensoranordnung unter Berücksichtigung der Richtung der Erdbeschleunigung vom Stellwinkel und der Fahrzeuglage abhängige Winkel-Messdaten erzeugt werden und unter Berücksichtigung der Richtung der Erdbeschleunigung von der Fahrzeuglage abhängige Messfehler-Messdaten erzeugt werden, sowie aus den Winkel-Messdaten unter Berücksichtigung der Messfehler-Messdaten rechnergestützt der Stellwinkel berechnet wird.

Die mit der Durchführung des Verfahrens verbundenen Vorteile zur Ermittlung eines Stellwinkels eines rotatorisch bewegten Stellelementes sind vorstehend im Zusammenhang mit dem erfindungsgemäßen Fahrzeug bereits erläutert worden und gelten für das erfindungsgemäße Verfahren entsprechend.

Für das erfindungsgemäße Verfahren wird erfindungsgemäß der Umstand genutzt, dass die Erdbeschleunigung immer senkrecht zum Erdmittelpunkt ausgerichtet ist und insofern als Vektor eine zuverlässige Referenz zur Ermittlung eines Stellwinkels darstellt, sofern die Winkelschenkel nicht genau in einer waagerechten Ebene liegen (d. h. die Drehachse eines den Stellwinkel verwirklichenden Stelleelementes senkrecht ausgerichtet ist).

Die Winkelmessdaten werden somit bezogen auf die senkrechte Richtung der Erdbeschleunigung erzeugt, wobei das Messverfahren geeignet sein muss, den Stellwinkel bezüglich dieser Referenz zu ermitteln.

Unter "rechnergestützt" oder "computerimplementiert" kann im Zusammenhang mit der Erfindung eine Implementierung des Verfahrens verstanden werden, bei dem mindestens ein Computer oder Prozessor mindestens einen Verfahrensschritt des Verfahrens ausführt.

Der Ausdruck "Rechner" oder "Computer" deckt alle elektronischen Geräte mit Datenverarbeitungseigenschaften ab. Computer können beispielsweise Personal Computer, Server, Handheld-Computer, Mobilfunkgeräte und andere Kommunikationsgeräte, die rechnergestützt Daten verarbeiten, Prozessoren und andere elektronische Geräte zur Datenverarbeitung sein, die vorzugsweise auch zu einem Netzwerk zusammengeschlossen sein können.

Unter einem "Prozessor" kann im Zusammenhang mit der Erfindung beispielsweise einen Wandler einen Sensor zur Erzeugung von Messsignalen oder eine elektronische Schaltung, verstanden werden. Bei einem Prozessor kann es sich insbesondere um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen, etc. handeln. Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden.

Als "Schnittstellen" können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Als "Programmmodule" sollen einzelne Funktionseinheiten verstanden werden, die einen erfindungsgemäßen Programmablauf von Verfahrensschritten ermöglichen. Diese Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Gemäß einer Ausgestaltung der Erfindung ist vorgesehen, dass die Winkel-Messdaten mit einen Mess-Beschleunigungssensor, der an dem Stellelement befestigt ist, erzeugt werden und die Messfehler-Messdaten mit einem Referenz-Beschleunigungssensor, der unbeweglich an dem Fahrzeug befestigt ist, erzeugt werden.

Die Verwendung von Beschleunigungssensoren (Mess-Beschleunigungssensor und Referenz-Beschleunigungssensor) hat den Vorteil, dass diese die Erdbeschleunigung bedingt durch ihr Messprinzip direkt nutzen. Gegenüber anderen Sensoren, wie zum Beispiel Gyroskopen, die hinsichtlich der Wirkungsrichtung der Erdbeschleunigung kalibriert werden müssen, macht dies das Messverfahren einfacher in der Anwendung und zuverlässiger hinsichtlich des Auftretens von Messfehlern.

Gemäß der Erfindung ist vorgesehen, dass als Stellwinkel mindestens ein Anschlagwert für das Stellelement berechnet wird, der gemessen wird, wenn eine Vergrößerung des Stellwinkels durch einen Anschlag verhindert wird.

Bei Fahrzeugen gibt es eine Vielzahl von rotatorisch gelagerten Stellelementen, deren Stellung von mindestens einem Anschlag begrenzt wird. Die Anwendung des erfindungsgemäßen Verfahrens auf diese Stellelemente macht ein Monitoring der Funktion möglich. Hierbei kann beispielsweise geprüft werden, ob der vorgesehene Stellwinkel am Anschlag erreicht bzw. eingehalten wird.

Gemäß einer Ausgestaltung der Erfindung ist vorgesehen, dass als Anschlagwerte ein Bremsanschlagwert berechnet wird, der bei einem Anschlag durch einen Kraftschluss zwischen den Reibpartnern einer Bremse gebildet wird, und/oder ein Löseanschlagwert berechnet wird, der bei einem Anschlag in der Bremsmechanik im gelösten Zustand der Bremse gebildet wird.

Die Anwendung des Verfahrens auf Bremsen setzt voraus, dass die Bremsen mittels mindestens eines rotatorischen Stellelementes verstellt werden. Als Anschlag, den es zu überwachen gilt, ist bei solchen Bremsen das Aufsetzen des Bremsbelags auf den anderen Reibpartner der Bremse zu verstehen. Die Kraftübertragung vom Aktor (beispielsweise Bremszylinder) auf die Bremse erfolgt beispielsweise bei den meisten auf dem Markt befindlichen Güterwagen über ein Bremsgestänge, welches mindestens eine drehbare Welle und/oder einen schwenkbaren Umlenkhebel aufweist. Bei Güterwagen erfolgt die Kraftübertragung beispielsweise durch eine Zugstange im Wagenkasten, die an einem am Radsatz befestigten Umlenkhebel zieht. Über den Umlenkhebel und ein weiteres Gestänge wird die Zugkraft auf alle Bremsklötze eines Drehgestells oder eines Wagenchassis verteilt und führt zu einem gleichmäßigen Andrücken der Bremsklötze auf die Radreifen.

Dabei steht die Winkeländerung des Umlenkhebels oder der Welle in einem direkten Zusammenhang mit der Summe der Wegstrecken, die die Bremsbeläge bei einem Bremsvorgang zwischen gelöster und angelegter Stellung zurücklegen. Je stärker die Bremsbeläge abgenutzt sind, umso größer ist die Winkelveränderung gegenüber dem Neuzustand der Bremsbeläge im angelegten Zustand, also am Anschlag (hierzu im Folgenden noch mehr).

Gemäß einer Ausgestaltung der Erfindung ist vorgesehen, dass der Bremsanschlagwert als Kalibrierungswert für den Bremsanschlag und/oder der Löseanschlagwert als Kalibrierungswert für den Löseanschlag gespeichert wird.

Der Verfahrensschritt einer Kalibrierung ist insbesondere von Vorteil, wenn die Bremsbeläge gerade erneuert wurden und somit noch keine Messwerte für die gewartete (oder auch neue) Bremsanlage vorliegen. Die Anschlagwerte, die dann durch ein Aktivieren bzw. Deaktivieren der Bremse als Bremsanschlagwert und Löseanschlagwert aus den zugehörigen Messwerten berechnet werden, bilden dann eine Referenz für den Neuzustand der Bremsbeläge, die in der Speichereinrichtung abgespeichert werden können.

Aber auch während der Nutzungsdauer von Bremsbelegen kann ein Kalibrierungsschritt durchgeführt werden. Beispielsweise kann turnusmäßig bei Wartungsmaßnahmen die Abnutzung der Bremsbeläge genau vermessen werden und anschließend für den vermessenen Zustand der Bremsbeläge neue Kalibrierungswerte erstellt werden.

Gemäß einer Ausgestaltung der Erfindung ist vorgesehen, dass der Bremsanschlagwert rechnergestützt mit einem Grenzwert verglichen wird und eine Ausgabe erfolgt, ob der Anschlagwert den Grenzwert unterschreitet und/oder erreicht und/oder überschreitet.

Kennt man den konstruktionsbedingten Zusammenhang zwischen der Winkeländerung bei fabrikneuen Bremsbelägen und der zu detektierenden Restbelagsstärke, kann man aus der Winkelstellung des Hebels auf die Belagstärke der Bremsbeläge schließen und der zu detektierenden Verschleißgrenze einen Winkel zuordnen.

Durch die Abnutzung der Beläge vergrößert sich der Stellwinkel bis zum Anschlag und damit der Anschlagwert bei anliegender Bremse zwischen dem Neuzustand und der Verschleißgrenze langsam, aber stetig, bis er den vorab definierten Grenzwert erreicht. Die Winkeländerung zwischen zwei Bremsvorgängen unterscheidet sich dabei aber kaum. Mit der Zeit wird bei einem regulären Betrieb jedoch der Grenzwert erreicht und anschließend überschritten.

Wird dieser Winkel erreicht, kann man die Information entweder elektronisch an den für die Wartung zuständigen Mitarbeiter versenden, oder dem Wagenmeister mittels einer am Fahrzeug angebrachten Anzeigeeinrichtung (z.B. der Anzeige eines Brems-Monitoring-Systems) visualisieren.

Gemäß einer Ausgestaltung der Erfindung ist vorgesehen, dass rechnergestützt eine Messreihe von Bremsanschlagwerten und/oder eine Messreihe von Löseanschlagwerten erstellt wird und der letzte berechnete Bremsanschlagwert und/oder Löseanschlagwert mit zumindest einem früheren Bremsanschlagwert und/oder Löseanschlagwert der Messreihe verglichen wird. Dabei werden selbstverständlich Bremsanschlagwerte immer mit andern Bremsanschlagwellen der betreffenden Messreihe und Löseanschlagwerte mit anderen Löseanschlagwerten der betreffenden Messreihe verglichen.

Da der Verschleiß der Klötze zwischen zwei Bremsungen im Mikrometerbereich liegt, wird man unter normalen Umständen zwischen zwei Bremsungen messtechnisch keine Winkelveränderung feststellen können. Die Erstellung einer Messreihe macht es aber möglich, die Entwicklung zu verfolgen. Dies ermöglicht beispielsweise Prognosen über den Verlauf der Abnutzung und bevorstehende Wartungsmaßnahmen wie den Wechsel der Bremsbeläge.

Gemäß einer Ausgestaltung der Erfindung ist vorgesehen, dass die Differenz zwischen dem letzten berechneten Bremsanschlagwert mit einem vor diesem Bremsanschlagwert liegendem Bremsanschlagwert der Messreihe berechnet wird und eine Ausgabe erfolgt, ob diese Differenz eine maximal zulässige Differenz unterschreitet und/oder erreicht und/oder überschreitet.

Dabei wird die maximal zulässige Differenz aus Erfahrungswerten für eine bestimmten Bremsenbauart derart festgelegt, dass diese oberhalb eines für den gewöhnlichen Verschleiß der Bremsbeläge geltenden Wert liegt. Dies bedeutet, dass ein Bremsanschlagwert, der diese maximal zulässige Differenz überschreitet, aufgrund eines außerordentlichen Ereignisses gemessen wurde. Unter der Voraussetzung einer einwandfreien Funktion des Messverfahrens deutet die Überschreitung der maximal zulässigen Differenz daher auf den Verlust mindestens eines Bremsklotzes hin. Dieser Verlust wird im Bremsgestänge nämlich dadurch ausgeglichen, dass dieses unter Einstellung eines größeren Stellwinkels des betreffenden Stellelementes so lange verstellt wird, bis alle Bremsbeläge und die mindestens eine Aufnahme des fehlenden Bremsklotzes den Bremsanschlag erreicht haben.

Geht also mindestens einer der Klötze (Bremsbeläge) verloren, vergrößert sich der für das Gestänge bei der Bremsung zurückzulegende Weg schlagartig. Diese Wegvergrößerung äußert sich auch in einer schlagartigen und messbaren Veränderung des besagten Stellwinkels. Dies kann durch einen einfachen Vergleich mit dem zuletzt berechnetem Anschlagwert der Messreihe ermittelt werden.

Da ein verlorener Bremsklotz während der Fahrt nicht ersetzt werden kann, reicht es normalerweise aus, die Messung vor dem Fahrtbeginn oder nach Beendigung der Fahrt durchzuführen und den Messwert abzuspeichern. Der Vergleich wird dann immer zwischen dem aktuellen Wert und dem gespeicherten Wert durchgeführt (für diesen Anwendungsfall reicht somit die Betrachtung einer Messreihe mit zwei Anschlagwerten, dem aktuellen und dem davorliegenden).

Gemäß einer Ausgestaltung der Erfindung ist vorgesehen, dass das Messen des Stellwinkels im Stillstand des Fahrzeugs gemessen wird.

Grundsätzlich ist auch das Messen des Stellwinkels während der Fahrt möglich. Dabei auftretende Beschleunigungen werden durch den Referenz-Beschleunigungssensor (bzw. durch das mit diesem erzeugten Messergebnis) eliminiert. Allerdings können die auftretenden und zu eliminierenden Messfehler vorteilhaft kleiner gehalten werden, wenn eine Messung im Stillstand des Fahrzeugs durchgeführt wird. Daher lassen sich vorteilhaft im Stillstand genauere Messergebnisse erzeugen.

Ein weiterer Vorteil liegt darin, dass im Stillstand während des Messverfahrens die Bremsen zum Zwecke der Erzeugung der Messwerte (kurzzeitig) aktiviert und deaktiviert werden können. So ist es möglich, sowohl einen Bremsanschlagwert als auch einen Löseanschlagwert in kurzer Folge nacheinander zu ermitteln.

Die genannte Aufgabe wird alternativ mit dem eingangs angegebenen Anspruchsgegenstand (Messanordnung) erfindungsgemäß auch dadurch gelöst, dass die Messanordnung aufweist:

- einen Mess-Beschleunigungssensor zur Erzeugung von von einem Stellwinkel eines Stellelementes und von einer Fahrzeuglage abhängigen Messdaten,
- einen Referenzbeschleunigungssensor zur Erzeugung von von einer Fahrzeuglage abhängigen Messdaten,
- eine Ausgabeeinrichtung,
- einen Computer,
- einer ersten Schnittstelle zwischen dem Mess-Beschleunigungssensor und dem Computer, einer zweiten Schnittstelle zwischen dem Referenz-Beschleunigungssensor und dem Computer und einer Ausgabeschnittstelle zwischen der Ausgabeeinrichtung und dem Computer.

Die Messanordnung kann zur Durchführung des oben angegebenen Verfahrens in ein oben bereits beschriebenes Fahrzeug eingebaut werden. Die Messanordnung eignet sich vorteilhaft insbesondere auch dazu, im Rahmen einer Nachrüstung in ein bestehendes Bremssystem eines Güterwaggons eingebaut zu werden. Dabei stellt die Messanordnung ein unabhängiges Funktionssystem dar, weil diese auch mit einem Computer zur Berechnung des Stellwinkels aus den ermittelten Messwerten (des Mess-Beschleunigungssensors und des Referenz-Beschleunigungssensors) aufweist.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Speichereinheit, die das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch durch mit den vorstehend beschriebenen Merkmalen der Erfindung kombinierbar.

Es zeigen:

Figur 1 ein Ausführungsbeispiel des erfindungsgemäßen Fahrzeugs mit ihren Wirkzusammenhängen schematisch,

Figur 2 ein Ausführungsbeispiel einer Computer-Infrastruktur der erfindungsgemäßen Messanordnung, wie diese auch in einem Fahrzeug gemäß Figur 1 verwendet werden kann, als Blockschaltbild, wobei die einzelnen Funktionseinheiten Programmmodule enthalten, die jeweils in einem oder mehreren Prozessoren ablaufen können und die Schnittstellen demgemäß softwaretechnisch oder hardwaretechnisch ausgeführt sein können,

Figur 3 ein Diagramm, bei dem die Änderung des Stellwinkels $\alpha$ in Abhängigkeit von Einzelmessungen n, die Messreihen ergeben, dargestellt ist,

Figur 4 und 5 Ausführungsbeispiele des erfindungsgemäßen Verfahrens als Flussdiagramme, wobei die einzelnen Verfahrensschritte einzeln oder in Gruppen durch Programmmodule verwirklicht sein können und wobei die Funktionseinheiten und Schnittstellen gemäß Figur 3 beispielhaft angedeutet sind.

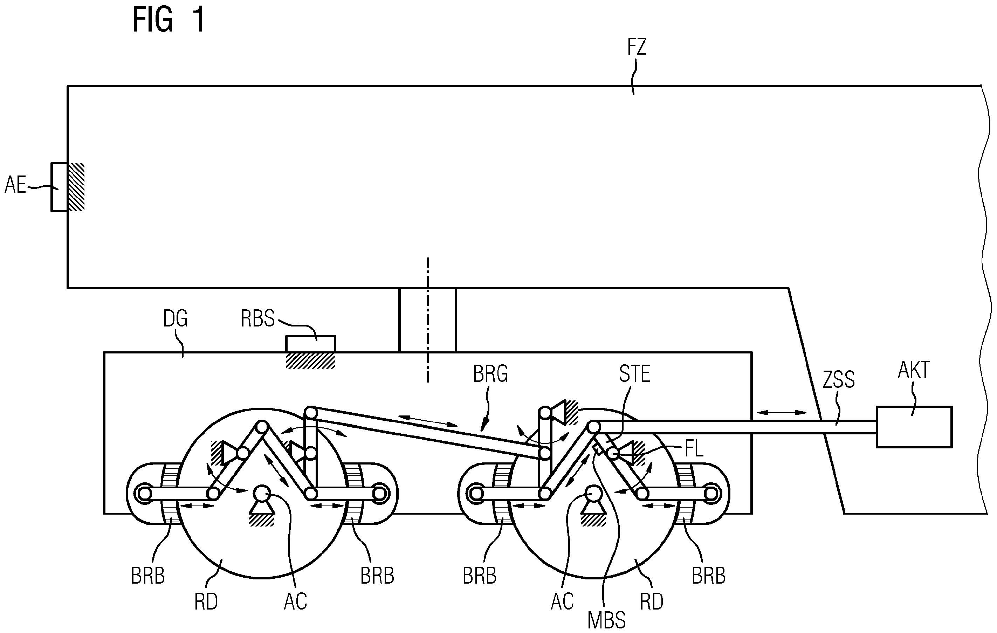

In Figur 1 ist ein Fahrzeug FZ in Form eines Güterwaggons dargestellt. Dieses Fahrzeug FZ weist an dem dargestellten Ende des Fahrzeugs ein Drehgestell DG auf, welches die Räder RD in zwei Achsen lagert. Schematisch dargestellt ist weiterhin ein Bremsgestänge BRG, welches eine Bewegung eines Aktors AKT auf die Bremsbeläge BRB überträgt, wobei die Bremsbeläge BRB direkt auf nicht dargestellte Radreifen der Räder RD wirken. Das Bremsgestänge BRG ist schematisch dargestellt. Es handelt sich hierbei um ein mechanisches Getriebe zur Übertragung der Stellbewegung des Aktors AKT, beispielsweise eines Hydraulikzylinders, auf die Bremsbeläge BRB. Das Getriebe besteht aus Zug- und Schubstangen ZSS, die zumindest hauptsächlich eine translatorische Bewegung durchführen, angedeutet in Figur 1 durch Doppelpfeile parallel zur Stangenausrichtung. Weiterhin gibt es Hebel, die um eine Drehachse geschwenkt werden können, angedeutet durch gekrümmte Doppelpfeile quer zur Ausrichtung der Hebel. Drehachsen bzw. Gelenke sind durch Kreise an den Enden der Zug- bzw. Schubstangen ZSS sowie der Hebel bzw. in deren Mitte angedeutet. Weiterhin ist die Lagerung der Achsen am Fahrzeug FZ durch Festlager FL angedeutet, wobei eine jeweilige Schraffur die starre Verbindung mit dem Fahrzeug FZ (inkl. des Drehgestells) andeutet.

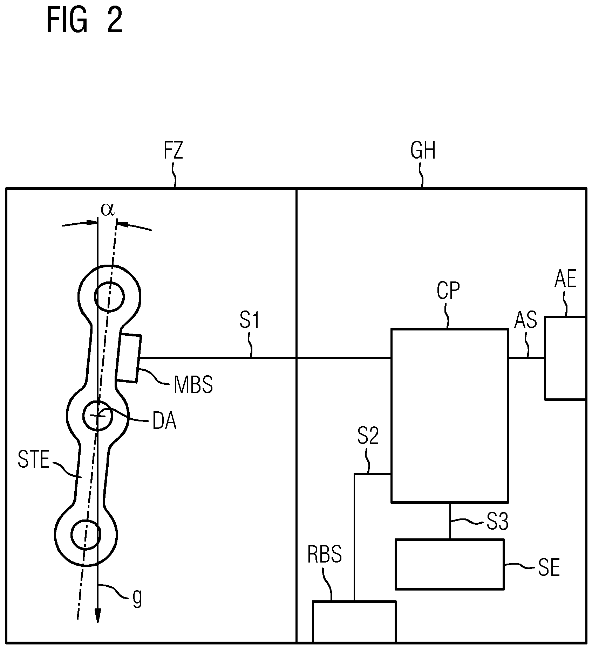

Einen der Hebel stellt das Stellelement STE dar, welches um das angedeutete Festlager FL schwenkbar gelagert ist, und das durch die vom Aktor AKT kommende Zug- bzw. Schubstange ZSS bewegt wird. An diesem Stellelement ist ein Mess-Beschleunigungssensor MBS starr befestigt, sodass dieser mit dem Stellelement STE hin und her schwenkt. Außerdem gibt es einen Referenz-Beschleunigungssensor RBS, der starr mit dem Fahrzeug FZ, gemäß Figur 1 mit dem Drehgestell DG (bildet einen Teil des Fahrzeugs FZ), verbunden ist. Der Mess-Beschleunigungssensor MBS und der Referenz-Beschleunigungssensor RBS kommunizieren über nicht näher dargestellte Funkschnittstellen mit einer Ausgabeeinrichtung AE, wobei die Ausgabeeinrichtung AE auch einen Computer zur Auswertung der empfangenen Messwerte enthält (vgl. auch Figur 2) Alternativ können auch Kabelschnittstellen verwendet werden (nicht dargestellt).

In Figur 2 ist das Zusammenwirken der an dem erfindungsgemäßen Verfahren beteiligten Funktionselemente schematisch als Blockschaltbild dargestellt. In diesem Fall ist das Fahrzeug FZ in einen Fahrzeug FZ symbolisierenden Block und ein Gehäuse GH, welches im Unterschied zu Figur 1 sowohl den Referenz-Beschleunigungssensor RBS als auch die Ausgabeeinrichtung AE aufnimmt und starr mit dem Fahrzeug FZ verbunden ist, aufgeteilt. Im Fahrzeug FZ ist exemplarisch das Stellelement STE dargestellt, welches um eine Drehachse DA (entspricht dem gekennzeichneten Festlager FL gemäß Figur 1) drehbar gelagert ist. Starr mit dem Stellelement STE verbunden ist der Mess-Beschleunigungssensor MBS.

Im Unterschied zu der in Figur 1 dargestellten Variante sind die Ausgabeeinrichtung AE und der Referenz-Beschleunigungssensor RBS in einem gemeinsamen Gehäuse GH gelagert. Dies vereinfacht vorteilhaft die Montage, wobei der Referenz-Beschleunigungssensor RBS damit automatisch ortsfest mit dem Fahrzeug FZ verbunden wird.

Der Mess-Beschleunigungssensor MBS ist über eine erste Schnittstelle S1 sowie der Referenz-Beschleunigungssensor RBS über eine zweite Schnittstelle S2 mit einem Computer CP verbunden, der die Messergebnisse auswertet. Der Computer CP ist überdies über eine dritte Schnittstelle S3 mit einer Speichereinrichtung SE verbunden, wobei in der Speichereinrichtung SE berechnete Stellwinkel in Form einer Messreihe sowie Kalibrierungswerte für eine Inbetriebnahme der Bremsen und Grenzwerte für deren Abnutzung dort abgespeichert werden können. Über eine Ausgabeschnittstelle AS ist der Computer CP mit der Ausgabeeinrichtung AE verbunden, wobei die Ausgabeeinrichtung AE vorzugsweise ein Display ist, welches Informationen bezüglich des Betriebs der Bremse darstellen kann, oder ein System mit beispielsweise einer Funkschnittstelle, das die Informationen direkt zu einer zentralen Stelle, z. B der Lokomotive, übertragen kann (nicht dargestellt). Die Ausgabeeinrichtung AE kann im einfachsten Fall durch (mindestens) eine Leuchte ausgebildet sein, die ohne weitere Informationen lediglich die Erforderlichkeit einer Wartung (Blinken bei Abnutzung der Bremsbeläge BRB über die Verschleißgrenze hinaus, Verlust von Bremsklötzen / Bremsbelägen) und den aktuellen Zustand der Bremse (Leuchten entspricht angelegt / Nicht leuchten entspricht gelöst) anzeigt.

In Figur 2 ist ein Stellwinkel $\alpha$ definiert als Abweichung der Ausrichtung des Stellelements STE (angedeutet durch dessen strichpunktierte Symmetrieachse) zur Senkrechten, in der die Erdbeschleunigung g wirkt (angedeutet durch einen nach unten gerichteten Pfeil). Für das Verfahren der Winkelberechnung aus Beschleunigungswerten ist dies eine vorteilhafte Variante, da der berechnete Winkel dem Stellwinkel $\alpha$ dann genau entspricht. Grundsätzlich kann die Berechnung des Stellwinkels $\alpha$ auch aus jeder anderen Lage des Stellelements STE berechnet werden. Beispielsweise kann die Stellung einer kalibrierten Lage des Stellelements am Löseanschlag, d. h. bei gelöster Bremse, oder am Bremsanschlag, d. h. bei angezogener Bremse, auf null gesetzt werden.

Wenn das ganze Fahrzeug FZ gegenüber der Erdbeschleunigung g geneigt ist (nicht dargestellt) enthält der Winkel $\alpha$ ebenfalls eine Komponente aufgrund der Neigung des Fahrzeugs FZ. Diese muss dann herausgerechnet werden, indem der durch Referenz-Beschleunigungssensor gemessene Winkelwert von den durch den Mess-Beschleunigungssensor gemessenen Winkelwert abgezogen wird, um den Stellwinkel zu erhalten.

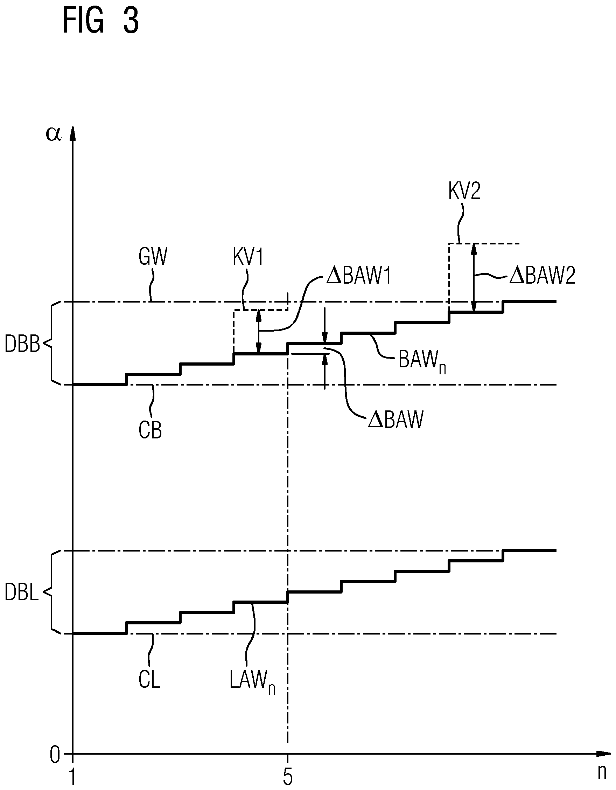

In Figur 3 ist dargestellt, wie sich der Stellwinkel $\alpha$ (gemessen wie zu Figur 2 beschrieben) im Laufe erfolgter einzelner Messungen n durch die Abnutzung der Bremsbeläge verändert. Hierbei wird deutlich, dass Messungen nur zu diskreten Zeitpunkten, beispielsweise jeweils vor Inbetriebnahme des Fahrzeugs, durchgeführt werden, und sich dadurch ein stufenförmiger Verlauf ergibt. Dargestellt sind jeweils einzelne Messungen für den Bremsanschlagwert $BAW_n$ sowie einzelne Messungen n für den Löseanschlagwert $LAW_n$. Der Löseanschlagwert LAW sowie der Bremsanschlagwert BAW werden jeweils aus den gemessenen Beschleunigungen des Mess-Beschleunigungssensors MBS sowie des Referenz-Beschleunigungssensors RBS (vgl. Figur 1) ermittelt.

Bei der ersten Messung gemäß Figur 3 (n = 1) befinden sich die Bremsbeläge im Neuzustand. Mit dieser Messung wird die erfindungsgemäße Messanordnung kalibriert, wobei ein Kalibrierungswert CL für den Löseanschlagwert $LAW_1$ und ein Kalibrierungswert CB für den Bremsanschlagwert $BAW_1$ berechnet werden. Diese können in der Speichereinrichtung SE (vgl. Figur 2) abgelegt werden.

Bei den nachfolgenden Messungen vergrößern sich die Stellwinkel $\alpha$ durch Abnutzung der Bremsbeläge (Bremsanschlagwerte $BAW_n$). Auch die Löseanschlagwerte $LAW_n$ können sich verändern, wie in Figur 3 dargestellt, wenn in Abhängigkeit vom Verschleiß der Bremsbeläge eine mechanische Nachführung des bei der Lösung der Bremse im Bremsgestänge vorgesehenen Löseanschlags durchgeführt wird (abhängig von der Bauform des Fahrzeugs). Findet eine solche Nachführung des Löseanschlags nicht statt, bleibt der Löseanschlagwert LAW konstant, sodass sich der Kalibrierungswert für den Löseanschlag CL nicht verändert.

Für die Entwicklung des Bremsanschlagwertes $BAW_n$ ist in Figur 3 ein Grenzwert GW eingezeichnet, der angibt, dass die Bremsbeläge ihre Verschleißgrenze erreicht haben. Der Kalibrierungswert für den Bremsanschlag CB sowie der Grenzwert GW definieren einen Driftbereich für den Bremsanschlag DBB. Ein Driftbereich DBL für den Löseanschlagwert ergibt sich dadurch automatisch durch die mechanische Nachführung des Löseanschlags.

Wie bereits erwähnt, entstehen die Stufen in dem Verlauf des Bremsanschlagwertes BAW durch die Abnutzung der Bremsbeläge, wobei zwischen einzelnen Messungen n, n + 1, jeweils eine verschleißbedingte Differenz zweier Bremsanschlagwerte $\Delta BAW$ liegt. Diese ist normalerweise klein und liegt im Mikrometerbereich. Um Messungenauigkeiten zu vermeiden, kann daher bei Erstellung einer Messreihe (die durch den Stufenverlauf gemäß Figur 3 dargestellt ist) auch auf einer weiter zurückliegenden Messung, beispielsweise bei einer Messung n auf den Bremsanschlagwert $BAW_{n-10}$ zurückgegriffen werden.

In Figur 3 ist auch ein Sprung des Bremsanschlagwertes BAW bei einem Verlust eines Bremsklotzes KV1 bzw. bei einem Verlust von zwei Bremsklötzen KV2 dargestellt. Es wird deutlich, dass die Differenz $\Delta BAW1$ sowie die Differenz $\Delta BAW2$ bedeutend höher ausfällt, da das Bremsgestänge den Verlust ausgleicht und das Stellelement STE somit sprunghaft einen größeren Stellwinkel beim Bremsen verwirklicht. Hierdurch wird der Verlust von Bremsklötzen erkannt und kann über die Ausgabeeinrichtung AE ausgegeben werden.

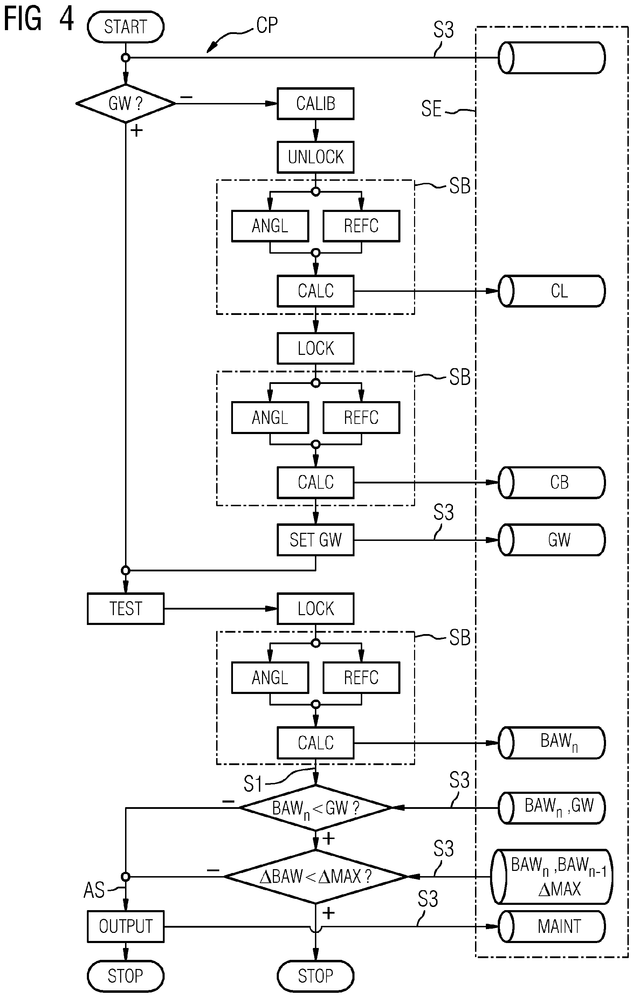

Der Figur 4 lässt sich beispielhaft der Verfahrensablauf bei dem erfindungsgemäßen Messverfahren entnehmen. Nachdem das Verfahren gestartet wurde, werden die verfügbaren Parameter aus der Speichereinrichtung SE geladen. In einem Abfrageschritt wird geprüft, ob bereits ein Grenzwert GW verfügbar ist. Wenn nicht, handelt es sich um neue Bremsbeläge, weswegen ein Kalibrierungsschritt CALIB durchgeführt wird. Beim Kalibrieren werden die Bremsen in einem Deaktivierungsschritt UNLOCK zunächst gelöst. Dann erfolgt in einem Messschritt ANGL des Mess-Beschleunigungssensors die Ermittlung eines Stellwinkel-Messwertes für die Winkelstellung des Stellelements und in einem Messschritt REFC für den Referenzwert durch den Referenz-Beschleunigungssensor die Erzeugung eines Messfehler-Messwertes. In einem anschließenden Berechnungsschritt CALC wird der Kalibrierungswert für den Löseanschlag CL berechnet und in die Speichereinrichtung SE übergeben.

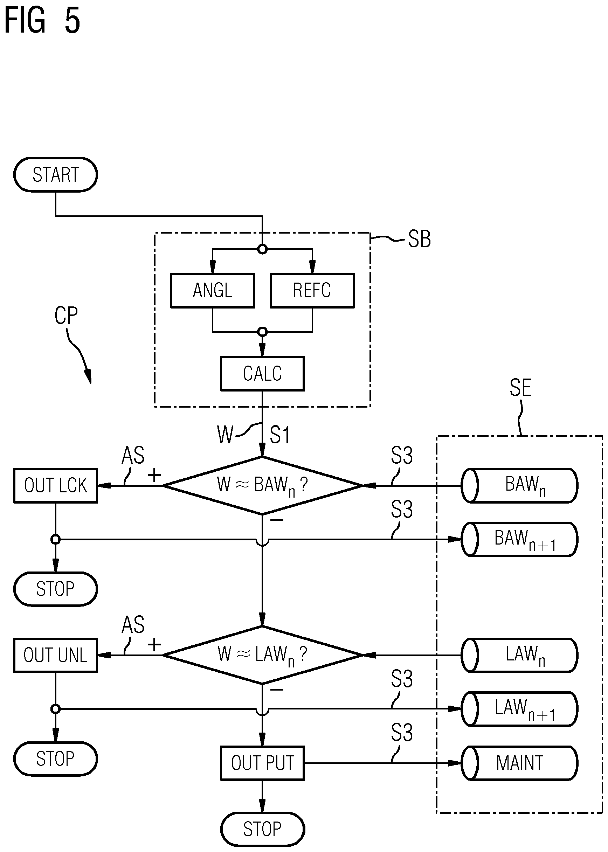

Die Berechnung des Kalibrierungswerts für den Löseanschlag CL sowie weiterer Löseanschlagwerte LAW sowie Bremsanschlagwerte BAW (inklusive des Kalibrierungswertes für den Bremsanschlag CB) werden bei dem Ausführungsbeispiel gemäß Figur 4 durch eine Sensorbaugruppe SB durchgeführt, die auch Rechenkapazität für den Berechnungsschritt CALC zur Verfügung stellt. Dies ist allerdings nur ein Ausführungsbeispiel. Möglich ist es auch, dass die Messschritte für die Winkelstellung ANGL sowie den Referenzwert REFC zur Durchführung des Berechnungsschritts für den Stellwinkel CALC an den Computer CP übergeben werden. Dies stellt die Konfiguration dar, welche gemäß Figur 2 beschrieben wurde. Für Figur 4 (und ebenso für Figur 5) gilt in diesem Fall, dass die mit Strichpunktlinie angedeutete Systemgrenze für die Sensorbaugruppe SB entfallen würde, ohne dass sich an dem Ablauf des Verfahrens sonst etwas ändern würde.

Im nächsten Schritt erfolgt ein Aktivierungsschritt LOCK für die Bremse, sodass die Bremsbeläge am Bremsanschlag anliegen. Der vorstehend beschriebene Mess- und Berechnungsschritt ANGL, REFC, CALC wird wiederholt und liefert den Kalibrierungswert für den Bremsanschlag CB, der durch den Computer CP an die Speichereinrichtung SE übergeben wird.

Im nachfolgenden Schritt kann ausgehend von dem Kalibrierungswert für den Bremsanschlag CB und der Kenntnis der Gegebenheiten der Bremsanlage, die formeltechnisch in der Speichereinrichtung SE abgelegt sein kann, im einem Bestimmungsschritt für den Grenzwert SET GW der Grenzwert GW berechnet und durch den Computer CP in die Speichereinrichtung SE übergeben werden.

Wenn ein Grenzwert GW bereits existiert, kann der Kalibrierungsschritt CALIB ausgelassen werden und es erfolgt ein Prüfschritt TEST, um den Zustand der Bremse zu überprüfen. Zu diesem Zweck wird ein Aktivierungsschritt der Bremse LOCK durchgeführt, soweit diese noch nicht angezogen ist. Anschließend erfolgt die Berechnung ANGL, REFC, CALC des Stellwinkels durch die Sensorbaugruppe SB, wie oben bereits ausgeführt. Es kann dann der aktuelle Bremsanschlagwert $BAW_n$ durch den Computer CP an die Speichereinrichtung SE übergeben werden. Anschließend prüft der Computer CP, ob der aktuelle Bremsanschlagwert $BAW_n$ den Grenzwert GW unterschreitet. Zu diesem Zweck wird der Grenzwert GW aus der Speichereinrichtung SE ausgelesen. Für den Fall, dass der Grenzwert GW erreicht oder überschritten ist, erfolgt in einem Ausgabeschritt OUTPUT die Ausgabe eines Wartungssignals, welches direkt an die Ausgabeeinrichtung AE gemäß Figur 2 gesendet werden kann oder als Wartungssignal MAINT in der Speichereinrichtung SE abgelegt werden kann, um später angezeigt zu werden.

Wird der Grenzwert GW durch den Bremsanschlagwert $BAW_n$ unterschritten, erfolgt eine weitere Abfrage, für die aus der Speichereinrichtung SE der vorher ermittelte Bremsanschlagwert $BAW_{n-1}$ sowie die maximal zulässige Differenz $\Delta MAX$ für eine Veränderung des Bremsanschlagwerts BAW ausgelesen wird. Ist die berechnete Differenz der Bremsanschlagwerte $BAW_n$ und $BAW_{n-1}$ kleiner als die maximal zulässige Differenz $\Delta MAX$, ist die Prüfung beendet und das Verfahren wird gestoppt. Ist das besagte Maximum überschritten, bedeutet dies, dass die Bremse mindestens einen Bremsklotz verloren hat, sodass ebenfalls in dem Ausgabeschritt OUTPUT für das Wartungssignal eine Ausgabe durch die Ausgabeeinrichtung AE erfolgt oder das Wartungserfordernis MAINT durch den Computer CP an die Speichereinrichtung SE zur späteren Ausgabe übergeben wird. Auch danach wird das Verfahren gestoppt.

In Figur 5 ist eine andere Funktion dargestellt, die mittels der erfindungsgemäßen Sensoranordnung erfüllt werden kann. Hierbei geht es um die Erkennung des Bremszustandes, also, ob sich die Bremsbeläge in der aktivierten (angezogenen) Stellung oder der deaktivierten (gelösten) Stellung befinden. Nach dem Start des Verfahrens wird der Mess- und Berechnungsschritt ANGL, REFC, CALC durch die Sensorbaugruppe SB durchgeführt. Hierbei wird der Wert W berechnet, der für das weitere Verfahren zur Verfügung steht. In einer nachfolgenden Abfrage wird überprüft, ob der Wert W ungefähr dem aktuellen Bremsanschlagwert $BAW_n$ entspricht. Ist dies der Fall, erfolgt ein Ausgabeschritt OUT LCK, dass die Bremse aktiviert, also in Bremsstellung ist. Optional kann der Wert W als neuer Bremsanschlagwert $BAW_{n+1}$ von dem Computer CP an die Speichereinrichtung SE übergeben werden. Anschließend wird das Verfahren gestoppt.

Entspricht der Wert W nicht ungefähr dem Bremsanschlagwert $BAW_n$, so wird in einem weiteren Abfrageschritt geprüft, ob der Wert W ungefähr dem aktuellen Löseanschlagwert $LAW_n$ entspricht. Ist dies der Fall, erfolgt ein Ausgabeschritt OUT UNL, dass die Bremse deaktiviert, also geöffnet, ist. Optional kann der Wert W als aktueller Löseanschlagwert $LAW_{n+1}$ durch den Computer CP an die Speichereinrichtung SE übergeben werden. Danach wird das Verfahren gestoppt.

Wenn auch der zweite Abfrageschritt negativ ausfällt, d. h. keine Ähnlichkeit zwischen dem Wert W und dem

aktuellen Löseanschlagwert $LAW_n$ besteht, erfolgt der Ausgabeschritt OUTPUT für ein Wartungssignal. Außerdem wird durch den Computer CP ein Wartungserfordernis MAINT an die Speichereinrichtung SE übergeben. Danach wird das Verfahren gestoppt.

Bei der Frage, ob der Wert W ungefähr dem Bremsanschlagwert $BAW_n$ oder dem Löseanschlagwert $LAW_n$ entspricht, sind einerseits Messfehler zu berücksichtigen, die sich in Kenntnis der Genauigkeit des Messverfahrens ohne Weiteres bestimmen lassen (daher ist eine ungefähre Übereinstimmung, also innerhalb eines Vertrauensintervalls gefordert). Außerdem ist zu berücksichtigen, dass, wie bereits zu Figur 3 erklärt, zwischen den Messungen abnutzungsbedingt eine Differenz $\Delta BAW$ zwischen der ermittelten Bremsanschlagwerten ergeben kann. Dasselbe gilt ggf. auch für den Löseanschlagwert LAW. Diese als Drift bezeichnete Veränderung in den Driftbereichen für den Bremsanschlag DBB und für den Löseanschlag DBL (vgl. Figur 3) ist ebenfalls zu berücksichtigen, wenn das Vertrauensintervall für eine ungefähre Übereinstimmung des Wertes W festgelegt wird.

Bezugszeichenliste

| | |
|---|---|
| FZ | Fahrzeug |
| DG | Drehgestell |
| RD | Rad |
| AC | Achse |
| FL | Festlager |
| ZSS | Zug-Schubstange |
| BRG | Bremsgestänge |
| AKT | Aktor |
| BRB | Bremsbelag |
| STE | Stellelement |
| DA | Drehachse |

| | |
|---|---|
| MBS | Mess-Beschleunigungssensor |
| RBS | Referenz-Beschleunigungssensor |
| GH | Gehäuse |
| AE | Ausgabeeinrichtung |
| CP | Computer |
| SE | Speichereinrichtung |
| SB | Sensorbaugruppe |
| AS | Ausgabeschnittstelle |
| S1 ... S3 | Schnittstelle |

| | |
|---|---|
| CALIB | Kalibrierungsschritt |
| UNLOCK | Deaktivierungsschritt für Bremse |
| ANGL | Messschritt für Winkelstellung |
| REFC | Messschritt für Referenzwert |
| CALC | Berechnungsschritt für Stellwinkel |
| LOCK | Aktivierungsschritt für Bremse |
| SET GW | Bestimmungsschritt für Grenzwert |
| TEST | Prüfschritt |
| OUTPUT | Ausgabe Wartungssignal |
| MAINT | Wartungserfordernis |
| OUT LCK | Ausgabeschritt für aktivierte Bremse |
| OUT UNL | Ausgabeschritt für deaktivierte Bremse |

| | |
|---|---|
| $\alpha$ | Stellwinkel |
| g | Erdbeschleunigung |
| n | Messung |
| CL | Kalibrierungswert für den Löseanschlag |
| CB | Kalibrierungswert für den Bremsanschlag |
| DBB | Driftbereich Bremsanschlag |
| DBL | Driftbereich Löseanschlag |

BAW      Bremsanschlagwert
LAW      Löseanschlagwert
$\Delta$BAW    Differenz zweier Bremsanschlagwerte
$\Delta$MAX    Maximal zulässige Differenz
GW       Grenzwert
KV1      Klotzverlust (ein Bremsbelag)
KV2      Klotzverlust (zwei Bremsbeläge)
W        Wert

**Patentansprüche**

1. Fahrzeug (FZ) mit einem rotatorisch beweglichen Stellelement (STE) und mit einer Sensoranordnung zur Messung eines Stellwinkels ($\alpha$) des Stellelementes (STE), wobei die Sensoranordnung

   • einen Mess-Beschleunigungssensor (MBS) aufweist, der an dem Stellelement (STE) befestigt ist, und
   • einen Referenz-Beschleunigungssensor (RBS) aufweist, der unbeweglich an dem Fahrzeug (FZ) befestigt ist, wobei die Sensoranordnung eingerichtet ist,

       • unter Berücksichtigung der Richtung der Erdbeschleunigung (g) vom Stellwinkel ($\alpha$) und der Fahrzeuglage abhängige Winkel-Messdaten zu erzeugen und
       • unter Berücksichtigung der Richtung der Erdbeschleunigung (g) von der Fahrzeuglage abhängige Messfehler-Messdaten zu erzeugen,

   wobei das Fahrzeug eingerichtet ist, aus den Winkel-Messdaten unter Berücksichtigung der Messfehler-Messdaten rechnergestützt den Stellwinkel ($\alpha$) zu berechnen,
   **dadurch gekennzeichnet,**
   **dass** das Fahrzeug eingerichtet ist, als Stellwinkel ($\alpha$) mindestens ein Anschlagwert für das Stellelement (STE) zu berechnen, der gemessen wird, wenn eine Vergrößerung des Stellwinkels ($\alpha$) durch einen Anschlag verhindert wird.

2. Fahrzeug (FZ) nach Anspruch 1
   **dadurch gekennzeichnet,**
   **dass** der Mess-Beschleunigungssensor (MBS) und der Referenz-Beschleunigungssensor (RBS) als Dreiachsensensor ausgeführt sind.

3. Fahrzeug (FZ) nach einem der voranstehenden Ansprüche,
   **dadurch gekennzeichnet,**
   **dass** das rotatorisch gelagerte Stellelement (STE) einen Teil eines Bremsgestänges (BRG) für das Fahrzeug (FZ) bildet.

4. Fahrzeug (FZ) nach einem der voranstehenden Ansprüche,
   **dadurch gekennzeichnet,**
   **dass** die Drehachse des rotatorischen Stellelementes (STE) in dem Fahrzeug (FZ) in Einbaulage zumindest im Wesentlichen waagerecht eingebaut ist.

5. Fahrzeug (FZ) nach einem der voranstehenden Ansprüche,
   **dadurch gekennzeichnet,**
   **dass** das Fahrzeug (FZ) eine Ausgabeeinrichtung (AE) aufweist, wobei diese eingerichtet ist, ein mit der Messung des Stellwinkels ($\alpha$) verknüpftes Ergebnis über eine Ausgabeschnittstelle (AS) zu empfangen.

6. Fahrzeug (FZ) nach Anspruch 5,
   **dadurch gekennzeichnet,**
   **dass** der Referenz-Beschleunigungssensor (RBS) und die Ausgabeeinrichtung (AE) als Baueinheit ausgeführt sind.

7. Verfahren zum Messen des Stellwinkels ($\alpha$) eines rotatorisch beweglichen Stellelementes (STE) in einem Fahrzeug (FZ) bei der eine Sensoranordnung zur Messung des Stellwinkels ($\alpha$) zum Einsatz kommt, wobei durch die Sensoranordnung

• unter Berücksichtigung der Richtung der Erdbeschleunigung (g) vom Stellwinkel ($\alpha$) und der Fahrzeuglage abhängige Winkel-Messdaten erzeugt werden und

• unter Berücksichtigung der Richtung der Erdbeschleunigung (g) von der Fahrzeuglage abhängige Messfehler-Messdaten erzeugt werden,

aus den Winkel-Messdaten unter Berücksichtigung der Messfehler-Messdaten rechnergestützt der Stellwinkel ($\alpha$) berechnet wird,

**dadurch gekennzeichnet,**

**dass** als Stellwinkel ($\alpha$) mindestens ein Anschlagwert für das Stellelement (STE) berechnet wird, der gemessen wird, wenn eine Vergrößerung des Stellwinkels ($\alpha$) durch einen Anschlag verhindert wird.

8. Verfahren nach Anspruch 7,
   **dadurch gekennzeichnet,**

   • **dass** die Winkel-Messdaten mit einem Mess-Beschleunigungssensor (MBS), der an dem Stellelement (STE) befestigt ist, erzeugt werden und

   • die Messfehler-Messdaten mit einen Referenz-Beschleunigungssensor (RBS), der unbeweglich an dem Fahrzeug (FZ) befestigt ist, erzeugt werden.

9. Verfahren nach Anspruch 8,
   **dadurch gekennzeichnet,**
   **dass** als Anschlagwerte

   • ein Bremsanschlagwert (BAW) berechnet wird, der bei einem Anschlag durch einen Kraftschluss zwischen den Reibpartnern einer Bremse gebildet wird, und/oder

   • ein Löseanschlagwert (LAW) berechnet wird, der bei einem Anschlag in der Bremsmechanik im gelösten Zustand der Bremse gebildet wird.

10. Verfahren nach Anspruch 9,
    **dadurch gekennzeichnet,**
    **dass** der Bremsanschlagwert (BAW) als Kalibrierungswert (CL) für den Bremsanschlag und/oder der Löseanschlagwert (LAW) als Kalibrierungswert (CL) für den Löseanschlag gespeichert wird.

11. Verfahren nach Anspruch 9 oder 10,
    **dadurch gekennzeichnet,**
    **dass** der Bremsanschlagwert (BAW) rechnergestützt mit einem Grenzwert (GW) verglichen wird und eine Ausgabe erfolgt, ob der Anschlagwert den Grenzwert (GW) unterschreitet und/oder erreicht und/oder überschreitet.

12. Verfahren nach einem der Ansprüche 9 bis 11,
    **dadurch gekennzeichnet,**
    **dass** rechnergestützt eine Messreihe von Bremsanschlagwerten (BAW) und/oder eine Messreihe von Löseanschlagwerten (LAW) erstellt wird und der letzte berechnete Bremsanschlagwert (BAW) und/oder Löseanschlagwert (LAW) mit zumindest einem früheren Bremsanschlagwert (BAW) und/oder Löseanschlagwert (LAW) der Messreihe verglichen wird.

13. Verfahren nach Anspruch 12,
    **dadurch gekennzeichnet,**
    **dass** die Differenz zwischen dem letzten berechneten Bremsanschlagwert (BAW) mit einem vor diesem Bremsanschlagwert (BAW) liegendem Bremsanschlagwert (BAW) der Messreihe berechnet wird und eine Ausgabe erfolgt, ob diese Differenz eine maximal zulässige Differenz unterschreitet und/oder erreicht und/oder überschreitet.

14. Verfahren nach einem der Ansprüche 7 bis 13,
    **dadurch gekennzeichnet,**
    **dass** das Messen des Stellwinkels ($\alpha$) im Stillstand des Fahrzeugs (FZ) gemessen wird.

15. Messanordnung, die zur Durchführung eines Verfahrens zum Messen eingerichtet ist,
    **dadurch gekennzeichnet,**
    **dass** diese aufweist:
    einen Mess-Beschleunigungssensor (MBS) zur Erzeugung von von einem Stellwinkel ($\alpha$) eines Stellelementes (STE)

und einer Fahrzeuglage abhängigen Messdaten,

- einen Referenz-Beschleunigungssensor (RBS) zur Erzeugung von von einer Fahrzeuglage abhängigen Messdaten,
- eine Ausgabeeinrichtung (AE),
- einen Computer (CP),
- einer ersten Schnittstelle (S1) zwischen dem Mess-Beschleunigungssensor (MBS) und dem Computer (CP), einer zweiten Schnittstelle (S2) zwischen dem Referenz-Beschleunigungssensor (RBS) und dem Computer (CP) und einer Ausgabeschnittstelle (AS) zwischen der Ausgabeeinrichtung (AE) und dem Computer (CP).

16. Computerprogrammprodukt mit Programmbefehlen,
die bei ihrer Ausführung durch einen Computer zur Durchführung des Verfahrens nach einem der Ansprüche 7-14 führen.

17. Bereitstellungsvorrichtung für das Computerprogrammprodukt nach dem letzten voranstehenden Anspruch, wobei die
Bereitstellungsvorrichtung das Computerprogrammprodukt speichert und/oder bereitstellt.

**Claims**

1. Vehicle (FZ) with a rotationally movable actuating element (STE) and with a sensor arrangement for measuring an actuating angle ($\alpha$) of the actuating element (STE), wherein the sensor arrangement

   - has a measuring acceleration sensor (MBS), which is fastened to the actuating element (STE), and
   - has a reference acceleration sensor (RBS), which is fastened immovably to the vehicle (FZ),
   wherein the sensor arrangement is configured

   - taking in account the direction of the acceleration due to gravity (g), to generate angle measurement data dependent on the actuating angle ($\alpha$) and the vehicle position and
   - taking in account the direction of the acceleration due to gravity (g), to generate error measurement data dependent on the vehicle position,

   wherein the vehicle is configured for computer-aided calculation of the actuating angle ($\alpha$) from the angle measurement data, taking into account the measurement error measurement data,
   **characterised in that**
   the vehicle is configured to calculate as actuating angle ($\alpha$) at least one stop value for the actuating element (STE), which is measured when an increase in the actuating angle ($\alpha$) is prevented by a stop.

2. Vehicle (FZ) according to claim 1
   **characterised in that**
   the measuring acceleration sensor (MBS) and the reference acceleration sensor (RBS) are designed as three-axis sensors.

3. Vehicle (FZ) according to one of the preceding claims,
   **characterised in that**
   the rotationally supported actuating element (STE) forms a part of a brake linkage (BRG) for the vehicle (FZ).

4. Vehicle (FZ) according to one of the preceding claims,
   **characterised in that**
   the axis of rotation of the rotational actuating element (STE) in the vehicle (FZ) is installed at least essentially horizontally in its installation position.

5. Vehicle (FZ) according to one of the preceding claims,
   **characterised in that**
   the vehicle (FZ) has an output facility (AE), wherein said facility is configured to receive a result linked to the measurement of the actuating angle ($\alpha$) via an output interface (AS) .

**6.** Vehicle (FZ) according to claim 5,
**characterised in that**
the reference acceleration sensor (RBS) and the output facility (AE) are designed as one structural unit.

**7.** Method for measuring the actuating angle ($\alpha$) of a rotationally movable actuating element (STE) in a vehicle (FZ) in which a sensor arrangement for measuring the actuating angle ($\alpha$) is employed, wherein by the sensor arrangement

• taking account of the direction of the acceleration due to gravity (g), measurement data dependent on the actuating angle ($\alpha$) and the vehicle position is generated and
• taking account of the direction of the acceleration due to gravity (g), measurement error measurement data dependent on the vehicle position is generated,
there is computer-aided calculation of the actuating angle ($\alpha$) from the angle measurement data, taking into account the measurement error measurement data,
**characterised in that**
at least one stop value is calculated for the actuating element (STE) as the actuating angle ($\alpha$), which is measured when an increase in the actuating angle ($\alpha$) is prevented by a stop.

**8.** Method according to claim 7,
**characterised in that**

• the angle measurement data is generated with a measuring acceleration sensor (MBS), which is fastened to the actuating element (STE) and
• the measurement error measurement data is generated with a reference acceleration sensor (RBS), which is fastened immovably to the vehicle (FZ).

**9.** Method according to claim 8,
**characterised in that**,
as stop values

• a brake stop value (BAW) is calculated, which is formed by a frictional contact between the friction partners of a brake, and/or
• a release stop value (LAW) is calculated, which is formed by a stop in the brake mechanism in the released state of the brake.

**10.** Method according to claim 9,
**characterised in that**
the brake stop value (BAW) is stored as a calibration value (CL) for the brake stop and/or the release stop value (LAW) is stored as a calibration value (CL) for the release stop.

**11.** Method according to claim 9 or 10,
**characterised in that**
there is a computer-aided comparison between the brake stop value (BAW) and a limit value (GW) and there is an output as to whether the stop value is less than the limit value (GW) and/or reaches and/or exceeds it.

**12.** Method according to one of claims 9 to 11,
**characterised in that**
there is computer-aided generation of a series of measurements of brake stop values (BAW) and/or a series of measurements of release stop values (LAW) and the last brake stop value (BAW) and/or release stop value (LAW) calculated is compared with at least one earlier brake stop value (BAW) and/or release stop value (LAW) of the series of measurements.

**13.** Method according to claim 12,
**characterised in that**
the difference between the last brake stop value (BAW) calculated and a brake stop value (BAW) of the series of measurements lying before this brake stop value (BAW) is calculated and there is an output as whether this difference is below a maximum allowed difference and/or reaches and/or exceeds it.

**14.** Method according to one of claims 7 to 13,

**characterised in that**
the measurement of the actuating angle (α) is made when the vehicle (FZ) is stationary.

15. Measurement arrangement, which is configured for carrying out a method for measurement,
    **characterised in that**
    said method has:
    a measuring acceleration sensor (MBS) for generation of measurement data dependent on an actuating angle (α) of an actuating element (STE) and a vehicle position,

    • a reference acceleration sensor (RBS) for generation of measurement data dependent on a vehicle position,
    • an output facility (AE),
    • a computer (CP),
    • a first interface (S1) between the measuring acceleration sensor (MBS) and the computer (CP), a second interface (S2) between the reference sensor (RBS) and the computer (CP) and an output interface (AS) between the output facility (AE) and the computer (CP).

16. Computer program product with program commands, which, when executed by a computer, lead to the method according to one of claims 7 - 14 being carried out.

17. Provision apparatus for the computer program product according to the last preceding claim, wherein the provision apparatus stores and/or provides the computer program product.


**Revendications**

1. Véhicule (FZ) ayant un élément (STE) de réglage mobile en rotation et ayant un dispositif capteur de mesure d'un angle (α) de réglage de l'élément (STE) de réglage, dans lequel le dispositif capteur

    • a un capteur (MBS) d'accélération de mesure, qui est fixé à l'actionneur (STE), et
    • a un capteur (RBS) d'accélération de référence, qui est fixé de manière inamovible au véhicule (FZ),
    dans lequel le dispositif capteur est agencé,

        • pour, en tenant compte de la direction de l'accélération (g) de l'apesanteur, produire des données de mesure d'angle, qui dépendent de l'angle (α) de réglage et de la position du véhicule, et
        • pour, en tenant compte de la direction de l'accélération (g) de l'apesanteur, produire des données de mesure d'erreur de mesure, qui dépendent de la position du véhicule,

    dans lequel le véhicule est agencé pour calculer l'angle (α) de réglage en étant assisté par ordinateur à partir des données de mesure d'angle, en tenant compte des données de mesure d'erreur de mesure,
    **caractérisé**
    **en ce que** le véhicule est agencé pour calculer comme angle (α) de réglage au moins une valeur de butée de l'élément (STE) de réglage, valeur qui est mesurée lorsqu'un agrandissement de l'angle (α) de réglage est empêché par une butée.

2. Véhicule (FZ) suivant la revendication 1,
   **caractérisé**
   **en ce que** le capteur (MBS) d'accélération de mesure et le capteur (RBS) d'accélération de référence sont réalisés sous la forme d'un capteur à trois axes.

3. Véhicule (FZ) suivant l'une des revendications précédentes,
   **caractérisé**
   **en ce que** l'élément (STE) de réglage monté à rotation forme une partie d'une tringlerie (BRG) de freinage du véhicule (FZ).

4. Véhicule (FZ) suivant l'une des revendications précédentes,
   **caractérisé**
   **en ce que** l'élément (STE) de réglage à rotation dans le véhicule (FZ) est monté en position de montage au moins sensiblement horizontalement.

**5.** Véhicule (FZ) suivant l'une des revendications précédentes,
**caractérisé**
**en ce que** le véhicule (FZ) a un dispositif (AE) de sortie, dans lequel celui-ci est agencé pour recevoir, en passant par une interface (AS) de sortie, un résultat combiné à la mesure de l'angle (α) de réglage.

**6.** Véhicule (FZ) suivant la revendication 5,
**caractérisé**
**en ce que** le capteur (RBS) d'accélération de référence et le dispositif (AE) de sortie sont réalisés sous la forme d'une unité de construction.

**7.** Procédé de mesure de l'angle (α) de réglage d'un élément (STE) de réglage mobile en rotation dans un véhicule (FZ), dans lequel on utilise un dispositif capteur pour la mesure de l'angle (α) de réglage, dans lequel par le dispositif capteur

• en tenant compte de la direction de l'accélération (g) de l'apesanteur, on produit des données de mesure d'angle, qui dépendent de l'angle (α) de réglage et de la position du véhicule, et
• en tenant compte de la direction de l'accélération (g) de l'apesanteur, on produit des données de mesure d'erreur de mesure, qui dépendent de la position du véhicule,
à partir des données de mesure d'angle, en tenant compte des données de mesure d'erreur de mesure, on calcule, en étant assisté par ordinateur, l'angle (α) de réglage,
**caractérisé**
**en ce que** l'on calcule, comme angle (α) de réglage, au moins une valeur de butée pour l'élément (STE) de réglage, valeur que l'on mesure lorsqu'un agrandissement de l'angle (α) de réglage est empêché par une butée.

**8.** Procédé suivant la revendication 7,
**caractérisé**

• **en ce que** l'on produit les données de mesure par un capteur (MBS) d'accélération de mesure, qui est fixé à l'élément (STE) de réglage, et
• **en ce que** l'on produit les données de mesure d'erreur de mesure par un capteur (RBS) d'accélération de référence, qui est fixé de manière inamovible au véhicule (FZ).

**9.** Procédé suivant la revendication 8,
**caractérisé**
**en ce que**, comme valeur de butée,

• on calcule une valeur (BAW) de butée de frein, que l'on forme, lors d'une butée, par une application de force entre les partenaires de frottement d'un frein, et/ou
• on calcule une valeur (LAW) de butée de desserrage, que l'on forme, lors d'une butée, dans la mécanique de frein dans l'état desserré du frein.

**10.** Procédé suivant la revendication 9,
**caractérisé**
**en ce que** l'on met en mémoire la valeur (BAW) de butée de frein comme valeur (CL) d'étalonnage de la butée de frein et/ou la valeur (LAW) de butée de desserrage comme valeur (CL) d'étalonnage de la butée de desserrage.

**11.** Procédé suivant la revendication 9 ou 10,
**caractérisé**
**en ce que** l'on compare, en étant assisté par ordinateur, la valeur (BAW) de butée de frein à une valeur (GW) limite et on produit une sortie, si la valeur de butée est inférieure et/ou atteint et/ou est supérieure à la valeur (GW) limite.

**12.** Procédé suivant l'une des revendications 9 à 11,
**caractérisé**
**en ce que** l'on établit, en étant assisté par ordinateur, une série de mesures de valeurs (BAW) de butée de frein et/ou une série de mesures de valeurs (LAW) de butée de desserrage et on compare la dernière valeur (BAW) de butée de frein et/ou la dernière valeur (LAW) de butée de desserrage calculée a au moins une valeur (BAW) de butée de frein et/ou une valeur (LAW) de butée de desserrage antérieure de la série de mesures.

**13.** Procédé suivant la revendication 12,

**caractérisé**

**en ce que** l'on calcule la différence entre la dernière valeur (BAW) de butée de frein calculée et une valeur (BAW) de butée de frein antérieure à cette valeur (BAW) de butée de frein de la série de mesures et on produit une sortie, si cette différence est inférieure et/ou atteint et/ou est supérieure à une différence admissible au maximum.

14. Procédé suivant l'une des revendications 7 à 13,
**caractérisé**
**en ce que** l'on effectue la mesure de l'angle ($\alpha$) de réglage à l'état d'arrêt du véhicule (FZ).

15. Dispositif de mesure, qui est agencé pour effectuer un procédé de mesure,
**caractérisé**
**en ce que** celui-ci comporte:
un capteur (MBS) d'accélération de mesure pour la production de données de mesure, qui dépendent d'un angle ($\alpha$) de réglage d'un actionneur (STE) et d'une position du véhicule,

- un capteur (RBS) d'accélération de référence pour la production de données de mesure, qui dépendent d'une position du véhicule,
- un dispositif (AE) de sortie,
- un ordinateur (CP),
- une première interface (S1) entre le capteur (MBS) d'accélération de mesure et l'ordinateur (CP), une deuxième interface (S2) entre le capteur (RBS) d'accélération de référence et l'ordinateur (CP) et une interface (AS) de sortie entre le dispositif (AE) de sortie et l'ordinateur (CP).

16. Produit de programme d'ordinateur ayant des instructions de programme, qui lors de leur exécution par ordinateur conduisent à l'exécution du procédé suivant l'une des revendications 7 à 14.

17. Dispositif de mise à disposition du produit de programme d'ordinateur suivant la dernière revendication précédente, dans lequel le dispositif de mise à disposition met en mémoire et/ou met à disposition le produit de programme d'ordinateur.

FIG 1

FIG 2

# FIG 3

# FIG 4

# FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3897979 A
- CA 2652618 A1
- DE 102013222201 A1